**Europäisches Patentamt**

**European Patent Office**

**Office européen des brevets**

(19)

(11) Publication number: **0 266 010 B1**

# EUROPEAN PATENT SPECIFICATION

(12)

(45) Date of publication of the patent specification:
04.04.90

(21) Application number: 87202072.2

(22) Date of filing: 27.10.87

(51) Int. Cl.⁴: **B01J 27/188**, B01J 21/04, B01J 27/16, C10G 45/08, B01J 37/04

(54) **Process for the preparation of hydrotreating catalysts from hydrogels.**

(30) Priority: 28.10.86 US 924225
28.10.86 US 924221

(43) Date of publication of application:
04.05.88 Bulletin 88/18

(45) Publication of the grant of the patent:
04.04.90 Bulletin 90/14

(84) Designated Contracting States:
BE DE FR GB NL

(56) References cited:
US-A- 3 493 517
US-A- 3 969 273
US-A- 4 003 828
US-A- 4 066 572
US-A- 4 560 466

(73) Proprietor: SHELL INTERNATIONALE RESEARCH
MAATSCHAPPIJ B.V., Carel van Bylandtlaan 30,
NL-2596 HR Den Haag(NL)

(72) Inventor: Kemp, Richard Alan, 11510 Chariot, Stafford
Texas 77477(US)

(74) Representative: Aalbers, Onno et al, P.O. Box 302,
NL-2501 CH The Hague(NL)

## Description

The present invention relates to a process for preparing highly active phosphated alumina hydrogel-derived catalysts, see also EP-A 266 008, 266 009, 266 011 and 266 012.

In the catalytic processing of petroleum feedstocks, it is often desirable to alter the pore structure of the catalyst in order to accommodate different types of feeds. For example, when processing feedstocks of high metals content, the metals tend to deposit rapidly on the catalyst surface and plug the pores of conventional hydroprocessing catalysts, resulting in a loss of catalytic activity for sulphur and nitrogen removal. To facilitate the diffusion of large components into and out of the catalysts and to prevent surface deposits of coke and metals, large pore diameters are required. On the other hand, when processing feedstocks with no metals or with low metals contents, it may be technically and economically desirable to use narrow-pore catalysts. For purposes of denitrification, narrow-pore catalysts normally have higher activities and longer lives than catalysts containing large pores which tend to deactivate quickly.

The present invention relates to a process for preparing highly active hydrotreating catalysts having surface areas above 300 m²/g and at least 80 % of the pore diameters less than 7 nm which process comprises

(a) precipitating from an aqueous solution of one or more aluminium salt(s) in the presence of a phosphorus-containing compound, by adjusting the pH of said solution to a range between 5.5 and 10.0 at a temperature in the range between 20 °C and 90 °C, thereby forming a precipitate ,

(b) ageing the precipitate at a temperature ranging from 20 °C to 90 °C for at least 15 minutes at a pH ranging from 8.0 to 12.0,

(c) washing the precipitate,

(d) mixing the precipitate with dry, water-soluble salts of a heavy metal selected from the group consisting of molybdenum, tungsten and mixtures thereof, and either of cobalt at a pH in the range between 4.0 and 10.0 or of nickel and a phosphorus-containing compound in an amount of from 0.2 to 1.5 moles of phosphorus per mole of heavy metal, at a pH in the range between 4.0 and 8.0 at a temperature in the range between 25 °C and 100 °C to yield a final catalyst having from 1 %w to 5 %w of cobalt and nickel and from 8 %w to 32 %w heavy metal,

(e) extruding the product of step (d), and

(f) drying and calcining the product of step (e) at a temperature ranging from 300 °C to 900 °C.

It has been found that hydrogel-derived catalysts can be prepared using the hydrogel as a solvent in the reaction of the hydrogel with metal salts. One of the benefits of adding no additional water when the metal salts are added to the hydrogel is that less metal is lost to the effluent during washing. In addition, the use of phosphorus-containing hydrogels gives catalysts having activities equal to or better than catalysts prepared by conventional impregnation techniques when compared on a volumetric basis while having densities significantly lower than conventionally prepared catalysts. Two of the major advantages of the hydrogel route are higher metals utilization and lower costs of catalyst manufacture. The catalysts prepared according to the process according to the present invention have high surface areas, greater than 300 m²/g; high flat plate crush strengths, greater than 80 N; and substantial portions, greater than 80%, of their pores with diameters less than 7 nm. These catalysts are particularly useful for hydrotreating applications.

In the process according to the present invention, highly active hydrotreating catalysts are suitably prepared by incorporating a heavy metal selected from the group consisting of molybdenum, tungsten and mixtures thereof, cobalt, or nickel and phosphorus into a phosphated alumina hydrogel-d erived support prepared by titrating an aqueous solution of an acid aluminium salt and an aqueous solution of a basic aluminium compound in the presence of a phosphorus-containing compound at a pH in the range between 5.5 an 10.0 and a temperature in the range between 20 °C and 90 °C thereby forming a precipitate.

The phosphated alumina hydrogel can thus be prepared by titrating an aqueous solution of one or more aluminium salt(s) with an appropriate acidic or basic material or solution in the presence of a phosphorus-containing compound to cause precipitation of the alumina gel. Those skilled in the art will recognize that the alumina gel can be prepared in a number of ways, e.g. by titrating an acidic aluminium salt such as, for example, aluminium sulphate, aluminium nitrate or aluminium chloride, in aqueous solution with a basic precipitating medium such as, for example, sodium hydroxide or ammonium hydroxide, in the presence of a phosphorus-containing compound, or, by titrating an alkali metal aluminate such as, for example, sodium aluminate or potassium aluminate, in aqueous solution with an acidic precipitating medium such as, for example, hydrochloric acid or nitric acid, in the presence of a phosphorus-containing compound. Those skilled in the art will recognize that the adjustment of the pH of an aluminium-containing solution to between 5.5 and 10.0 will result in precipitation of the aluminium moiety as aluminium hydroxide or hydrated aluminium oxide.

In a preferred embodiment, the phosphated alumina hydrogel is prepared by titrating an aqueous solution of an alkali metal aluminate and an aqueous solution of an acid aluminium salt in the presence of a phosphorus-containing compound to cause precipitation of the phosphated alumina gel. Suitable acidic aluminium salts include aluminium sulphate, aluminium nitrate and aluminium chloride. A preferred species is aluminium chloride. Suitable alkali metal aluminates are sodium aluminate and potassium aluminate. The precipitation can be carried out by adding an aqueous solution of the basic aluminium species to an aqueous solution of the acidic aluminium species or the procedure can be reversed by adding an aqueous solution of the acidic aluminium species to an aqueous solution of the basic aluminum species (referred to as "sequential precipitation"). Preferably, the precipitation in the process according to the present invention is carried out by simultaneously adding the acid aluminium species and the basic aluminium species, at least one of which has a phosphorus-containing compound dissolved therein, to cause precipitation of the hydrogel (referred to as "simultaneous precipitation").

As used herein, the term "a phosphorus-containing compound" is generic and refers to one phosphorus-containing compound as well as to more than one phosphorus-containing compound. The phosphorus-containing compound is generally selected from the group consisting of phosphoric acid, a phosphate salt and mixtures thereof. Suitable phosphate salts include alkali metal phosphates, alkali metal hydrogen phosphates, ammonium phosphate and ammonium hydrogen phosphate. The phosphorus-containing compound is preferably phosphoric acid and is preferably mixed with the acid aluminium species prior to precipitation. Alternatively, the phosphorus-containing compound can be sodium or ammonium phosphate and mixed with the basic aluminium species prior to precipitation. The phosphorus-containing compound can also be added as a separate solution or added to both the acid aluminium species and the basic aluminium species without significantly affecting the results. In a preferred embodiment, the phosphorus-containing compound is prepared using commercially available 85% phosphoric acid although other phosphorus-containing materials may be utilized. The amount of phosphorus-containing compound added to the acid aluminium species and/or the basic aluminium species is suitably from 0.06 to 0.30 moles of phosphorus per mole of aluminium.

The temperature and pH of the precipitation are important variables in the preparation of the phosphated aluminas into which dry metal salts can be incorporated to form hydrotreating catalysts with desirable physical qualities. Changes in precipitation temperatures and pHs result in changes in porosities. In the process according to the present invention, a precipitation temperature typically ranges from 20°C to 90°C, and preferably from 50°C to 85°C, and a precipitation pH typically ranges between 5.5 and 10.0, preferably between 5.5 and 8.0, and more preferably between 6.0 and 7.5. The length of time required for the precipitation step is not critical. However, the maximum rate of addition of the acid aluminium species and the basic aluminium species is fixed by the rate at which the two streams can be mixed and the pH and temperature of the system can be effectively controlled.

After precipitation has taken place, the pH of the slurry obtained is adjusted by addition of a basic aluminate solution to fall in the range from 8.0 to 12.0, preferably in the range from 9.0 to 11.0, most preferably in the range from 9.5 to 10.5, and the resulting mass is aged at a temperature in the range from 20°C to 90°C, preferably from 50°C to 85°C for at least 15 minutes. An upper limit on the length of time for ageing is not critical and is normally determined by economical considerations. Ageing times will typically range from 0.1 to 10 hours, preferably from 0.25 to 5 hours, and more preferably from 0.25 to 1 hour. In general, aluminas with acceptable properties are produced by holding the ageing temperature substantially equal to the precipitation temperature.

After ageing, the slurry is washed and filtered in routine fashion to remove substantially all the salts formed during the precipitation of the hydrogel which can be removed by washing. The preferred solvent for washing is water although other solvents such as lower alkanols may be utilized.

After washing, the precipitate is mixed with dry, water-soluble salts of a heavy metal selected from the group consisting of molybdenum, tungsten and mixtures thereof and cobalt at a pH in the range between 4.0 and 10.0 or with nickel and a phosphorus-containing compound, in an amount of from 0.2 to 1.5 moles of phosphorus per mole of heavy metal at a pH in the range between 4.0 and 8.0. The hydrogel and the salts are mixed until dissolution and adsorption of the metal salts is essentially complete. The metal salts of nickel of cobalt and molybdenum and/or tungsten are added to the hydrogel in amounts sufficient to incorporate into the final calcined catalyst from 1 %w to 5 %w of cobalt or nickel and from 8 %w to 18 %w molybdenum or 10 %w to 32 %w tungsten. When mixtures of molybdenum and tungsten are utilized, the final catalyst normally contains 8 %w to 32 %w molybdenum and/or tungsten.

In a preferred embodiment, molybdenum is added to the hydrogel in the form of a dry, water-soluble source of molybdenum such as ammonium heptamolybdate or ammonium dimolybdate. Tungsten is preferably added to the hydrogel as ammonium metatungstate. Nickel is preferably added to the hydrogel in the form of dry, water-soluble nickel nitrate, nickel acetate, nickel formate, nickel sulphate, nickel oxide, nickel phosphate, nickel carbonate, nickel chloride or nickel hydroxide, with nickel nitrate and nickel carbonate being preferred. Phosphorus is preferably added directly to the hydrogel as phosphoric acid, a phosphate salt or mixtures thereof. Alternatively, the dry nickel salt and the phosphorus compound can be mixed prior to addition to the hydrogel. Cobalt is added to the hydrogel in the form of dry, water-soluble cobalt nitrate, cobalt hydroxide, cobalt acetate, cobalt oxalate or cobalt oxide, with cobalt nitrate being preferred. In a preferred embodiment, a phosphorus-containing compound in an amount of phosphorus in the range from 0.2 to 1.5 moles of phosphorus per mole of molybdenum or tungsten is added directly to the hydrogel. Alternatively, the phosphorus-containing compound can be mixed with the dry cobalt salt prior to addition to the hydrogel. The phosphorus-containing compound is typically selected from the group consisting of phosphoric acid, a phosphate salt and mixtures therof.

A preferred method of mixing the dry metal salts of nickel or cobalt and molybdenum and/or tungsten with the hydrogel comprises adding hydrogen peroxide to the mixture in an amount ranging from 0.1 to 1.0 mole of hydrogen peroxide per mole of molybdenum and/or tungsten. Optionally, a suitable amine compound such as monoethanolamine, propanolamine or ethylenediamine may be added to the mixture in order to aid in stabilization of the mixture.

The dry metal salts of nickel or cobalt and molybdenum and/or tungsten are typically added to the hydrogel in the form of finely divided particles which are generally 0.15 mm or less in size. While particle size is not critical and larger particles may be utilized, it is economically advantageous to use particles which are 0.15 mm or less in size.

The temperature and pH of the mixing step are both important variables in the preparation of hydrogel-derived catalysts which have acceptable densities and porosities. In general, high temperatures in the mixing step result in lower density catalysts. The pH of the mixing step, however, appears to be critical to the formation of catalysts having the desired properties. Upper limits on the pH of the mixing step will be 9.5, preferably 9.0, more preferably 8.5 and most preferably 8.0. Lower limits on the pH of the mixing step will be 4.0, preferably 5.0 and more preferably 4.5. The mixture of the hydrogel support with the dry metal salts is typically carried out at a pH in the range between 4.0 and 8.0, preferably between 4.0 and 6.0, adjusting to these pH ranges by adding, if necessary, acid or base to the hydrogel and/or to the mixture of the dry metals and the hydrogel, and a temperature in the range between 25 °C and 100 °C, preferably between 25 °C and 80 °C, until adsorption of the metals salts onto the gel is sufficient to yield a final calcined catalyst having from about 1%w to 5 %w of cobalt or nickel and from 8 %w to 18 %w molybdenum or from 10 %w to 32 %w tungsten. Typically, the times for mixing the hydrogel with the dry metal salts will range from 0.5 to 2 hours.

Following the mixing step, the material obtained may be extruded and then dried and calcined; dried, mulled with addition of water, extruded or pelleted and calcined; or partially dried, extruded or pelleted, dried more completely and calcined. Drying is accomplished by conventional means. It may be carried out by forced draft drying, vacuum drying, air drying or similar means. Drying temperatures are not critical and depend upon the particular means utilized for drying. Drying temperatures will typically range from 50 °C to 150 °C.

In a preferred embodiment, the material is extruded and then dried. Alternatively, the material may be extruded after drying to the proper loss on ignition (LOI). However, to facilitate extrusion, organic binders and/or lubricants may be added prior to extrusion.

After drying, the material is calcined to produce the finished catalyst. The material may be calcined in any atmosphere, reducing, oxidizing or neutral, although air is preferred. However, if binders and/or lubricants are used the material is heated in an oxygen-containing atmosphere, preferably air, in order to burn out the binders and lubricants. Calcining temperatures will typically range from 300 °C to 900 °C. Drying, calcining and burn-out may be combined in one or two steps. Most frequently the calcining and/or burn-out steps are combined using an oxygen-containing atmosphere.

Certain other processing steps may be incorporated into the above-described procedure without deviating from the scope and intent of the process according to the present invention. For example, prior to the complete drying of the catalyst, it may be extruded and then dried more completely, followed by calcination.

The final catalysts are found to have surface areas greater than 300 m²/g, pore volumes ranging from 0.4 to 1.2 ml/g and with at least 80% of their respective pore volumes in pores having diameters less than 7 nm. Crush strengths are generally greater than 80 N. In general, the metals contents of the final catalysts range from 1 %w to 5 %w, preferably from 2.5 %w to 4 %w of cobalt or nickel, and from 8 %w to 18 %w, preferably 10 %w to 14 %w molybdenum or 10 %w to 32 %w, preferably 18 %w to 26 %w tungsten.

The catalysts prepared in accordance with the present invention can be suitably applied to hydrocarbon conversion processes such as catalytic cracking, hydrocracking, hydrotreating, isomerization, hydrogenation, dehydrogenation, oligomerization, alkylation, dealkylation and the like.

The catalysts prepared in accordance with the present invention are most commonly employed in hydrotreating feedstocks ranging in volatilities from napthas to flashed distillates. Reaction temperatures will typically range from 150 °C to 450 °C, preferably from 260 °C to 415 °C. Reaction pressures are generally within the range of 14 to 175 bar, preferably from 42 to 105 bar. Reactions are normally conducted at liquid hourly space velocities within the range of from 0.1 to 10 reciprocal hour.

Multiple uses of these feedstock after treating with the catalysts of this invention are also possible. Depending on the particular feedstocks treated, suitable uses can include conversion unit feedstocks such as cat. cracking, thermal cracking and hydrocracking, or finished products such as gasoline, diesel, airline turbine fuel, furnace oils and solvents.

The process for preparing the catalysts in accordance with the present invention will be further described below by the following Examples which are provided for illustration and which are not to be construed as limiting the invention.

Example 1

Five hundred and eighty-three grams of reagent grade sodium aluminate were added to 787 grams of water which was then heated to 60°C in order to effect dissolution of the materials. 271.5 grams of aluminium chloride hexahydrate were added to 380 grams of water. Fifty-six grams of 85% phosphoric acid along with 112 grams of water were added to the aluminium chloride solution which was then heated to 60°C. Both solutions were cooled to slightly less than 60°C and placed in dropping funnels.

Five thousand grams of water were added to a 10 litre stainless steel bucket equipped with a pH meter, thermometer and stirrer. After the pH was adjusted to 7.0 using the sodium aluminate solution, the two solutions in the dropping funnels were added simultaneously to the well-stirred bucket, maintaining a precipitation pH of 7. Both reagents were added in their entirety. After these quantities of reagents had been used, the final ageing pH of the solution was adjusted to 10.0 using hydrochloric acid. The solution was aged for one hour at 60°C. The resulting material was filtered and washed in two large Buchner funnels with about 50 litres of water. The excess water from the wet filter cake was removed by vacuum. The hydrogel was then divided into two equal portions.

A mixture of 30.87 grams of nickel nitrate and 30.88 grams of 85% phosphoric acid was then prepared. This mixture, along with 45.79 grams of ammonium heptamolybdate, 5.6 grams of monoethanolamine and 10 milliliters of hydrogen peroxide were mixed into one portion of the vigorously stirred hydrogel. The mixture was stirred at room temperature for two hours at a pH of 5.5. At the end of two hours, the slurry was filtered and excess water was removed by vacuum. The gel was then extruded using a small, hand-held extruder using a 4 mm cylindrical die, dried overnight at 120°C and calcined in air at 510°C. The properties of the catalyst are listed in Tables I and II.

Example 2

The preparation as described in Example 1 was repeated but using this time 56 grams of phosphoric acid along with 56 grams of water to add to the aluminium chloride solution. Instead of a nickel-containing catalyst a cobalt-containing catalyst was prepared by adding the following reagents directly to one portion of the hydrogel. 30.91 grams of cobalt nitrate as hexahydrate, 15.6 grams of 85% phosphoric acid, 50.04 grams of ammonium heptamolybdate, 14.8 grams of 30% hydrogen peroxide and 8.3 grams of monoethanolamine were mixed into the gel with vigorous stirring. The mixure was then stirred for two hours at a pH of 6.0 and a temperature of 25°C. At the end of two hours, the slurry was filtered and any excess water from the slurry was removed by vacuum. The wet gel was then extruded using a small, hand-held extruder using a 4 mm cylindrical die, dried overnight at 120 °C and calcined in air at 510°C. The properties of the catalyst are listed in Tables IV and V.

Example 3

A catalyst was prepared as described in Example 2 except that no phosphoric acid was added in the mixing step. The properties of the catalyst are listed in Tables IV and V.

Example 4

A catalyst was prepared as described in Example 2 except that the pH in the mixing step was adjusted to 10.0 using ammonium hydroxide. The properties of the catalyst are listed in Tables IV and V.

Comparative Experiment A

A catalyst was prepared as described in Example 1 except that the pH in the mixing step was adjusted to 10.0 using ammonium hydroxide. The properties of the catalyst are listed in Tables I and II.

Comparative Experiment B

A catalyst was prepared as described in Example 1 except that the pH in the mixing step was adjusted to 2.0 using hydrochloric acid. The materials prepared in this experiment appeared to be unsuitable for testing as the alumina support dissolved when the pH was adjusted to 2.0.

Comparative Experiment C

A catalyst was prepared as described in Example 1 except that no phosphoric acid was added in the mixing step. The properties of the catalyst are listed in Tables I and II.

Comparative Experiment D

A catalyst was prepared using a conventional dry pore volume impregnation technique. A solution suitable for impregnating a gamma alumina carrier was prepared as follows. A first solution was made by adding 19.39 grams of nickel nitrate and 16.18 grams of phosphoric acid to 5 millilitres of water which solution was then heated to 40 °C and stirred in order to effect dissolution of the materials. A second solution was prepared by mixing 5.5 millilitres of 30% hydrogen peroxide, 30 millilitres of distilled water and 35.20 grams of ammonium heptamolybdate. The mixture was then heated to 40 °C and stirred until all solids were dissolved. When both solutions were at or near ambient temperature, the second solution was slowly added to the first solution while stirring. After cooling and diluting with water to match the total pore volume of the support, the solution was added to the gamma alumina support in several small portions with intermediate agitations. The impregnated support was further agitated during a period of 5 minutes, dried for 2 hours at 204 °C and calcined in air for 2 hours at 482 °C. The properties of the catalyst are listed in Tables I and II.

Comparative Experiment E

A catalyst was prepared as described in Example 2 except that the pH in the mixing step was adjusted to 2.0 using aqueous hydrochloric acid. The materials prepared in this experiment appeared to be unsuitable for testing as the alumina support dissolved when the pH was adjusted to 2.0.

Comparative Experiment F

A catalyst was prepared using a conventional dry pore volume impregnation technique. A solution suitable for impregnating a gamma alumina carrier was prepared as follows. A first solution was made by adding 15.37 grams of cobalt mitrate and 9.67 grams of phosphoric acid to 5 millilitres of water which solution was then heated to 40 °C and stirred in order to effect dissolution of the materials. A second solution was prepared by mixing 4.0 millilitres of 30 % hydrogen peroxide, 40 millilitres of distilled water and 23.39 grams of ammonium heptamolybdate. The mixture was then heated to 40 °C and stirred until all solids were dissolved. When both solutions were at or near ambient temperature, the second solution was slowly added to the first solution while stirring. After cooling and diluting with water to match the total water pore volume of the support, the solution was added to the gamme alumina support in several small portions with intermediate agitations. The impregnated support was further agitated during a period of 5 minutes, dried for 2 hours at 204 °C and calcined in air for 2 hours at 482 °C. The properties of the catalyst are listed in Tables IV and V.

Catalyst Testing

Catalyst samples were used to hydrotreat a catalytically-cracked heavy gas oil (CCHGO) in a trickle-flow reactor. Ten ml of the appropriate extruded catalyst were crushed and sieved to 0.3 -1 mm (16-45 mesh), diluted with silicon carbide, and loaded into a typical trickle-flow reactor tube. The catalyst was presulphided with a 5% $H_2S/H_2$ (v/v) gas mixture at 371 °C for 2 hours prior to testing. A CCHGO was passed over the catalyst at 343°C and a partial hydrogen pressure of 56 bar with a $H_2$/oil ratio equal to 4.0. Measured rate constants include hydrogenation, denitrification and desulphurization and are reported relative to the impregnated catalyst (Example D) together with specific catalyst performance characteristics in Table III for nickel-containing catalysts. Measured rate constants for cobalt-containing catalysts are given in Table VI.

EP 0 266 010 B1

## TABLE I

### Catalyst Properties

| | EXAMPLE 1 | COMPARATIVE EXPERIMENT A | COMPARATIVE EXPERIMENT C | COMPARATIVE EXPERIMENT D |
|---|---|---|---|---|
| Ageing pH[a] | 10.0 | 10.0 | 10.0 | |
| Density g/ml[b] | 0.68 | 0.70 | 0.83 | 0.86 |
| Reslurry pH[c] | 5.5 | 10.0 | 5.5 | |
| $N_2$ Surface Area $m^2$/g[d] | 402 | 288 | 334 | 186 |
| $N_2$ Pore Volume ml/g[e] | 0.57 | 0.44 | 0.58 | |
| Flat Plate Crush Strength N.[f] | 147 | 27 | 54 | 78 |
| %wt. Nickel[g] | 2.8 | 2.0 | 1.5 | 2.7 |
| %wt. Molybdenum[h] | 9.8 | 5.0 | 10.2 | 13.2 |
| %wt. Phosphorus[i] | 5.4 | 6.0 | 2.5 | 3.0 |

## TABLE II

### Catalyst Pore Size Distributions

| Hg Pore[j) Size Dist | EXAMPLE 1 | COMPARATIVE EXPERIMENT A | COMPARATIVE EXPERIMENT C | COMPARATIVE EXPERIMENT D |
|---|---|---|---|---|
| < 5 nm | 55.6 | 63.8 | 88.7 | 1.7 |
| 5 - 7 nm | 26.6 | 8.7 | 3.1 | 15.3 |
| 7 - 10 nm | 6.4 | 5.6 | 2.2 | 29.3 |
| 10 - 15 nm | 4.0 | 5.2 | 2.3 | 40.3 |
| 15 - 35 nm | 3.4 | 8.1 | 2.1 | 5.1 |
| > 35 nm | 3.9 | 8.6 | 1.6 | 8.4 |

EP 0 266 010 B1

EP 0 266 010 B1

## TABLE III

### Specific Catalyst Performance

| | CCHGO (METALS BASIS) | | | NO. GRAMS METAL IN 10 CC CAT. | DENSITY G/CC | WEIGHT % | |
|---|---|---|---|---|---|---|---|
| | H | N | S | | | Ni | Mo |
| Example 1 | 1.59 | 1.18 | 1.63 | 0.86 | 0.68 | 2.8 | 9.8 |
| Comparative Experiment C | 1.19 | 0.66 | 0.92 | 0.97 | 0.83 | 1.5 | 10.2 |
| Comparative Experiment D | 1.0 | 1.0 | 1.0 | 1.37 | 0.86 | 2.7 | 13.2 |

H — hydrogenation

N — denitrogenation

S — desulphurization

a) Measured using an Orion 231 pH meter and Orion electrodes.
b) 209 ml volume fully settled in a graduated cup and weighed.
c) Measured using an Orion 231 pH meter and Orion electrodes.
d) BET, by nitrogen adsorption/desorption, Micromeritics Digisorb 2500 Instrument.
e) By nitrogen adsorption, Micromeritics Digisorb 2500 Instrument.
f) Flat plate, single pellet, extrudate approximately 5 mm in length.
g) Weight percent determined by neutron activation analysis or atomic absorption spectroscopy.
h) Weight percent determined by neutron activation analysis or atomic absorption spectroscopy
i) Weight percent determined by neutron activation analysis or atomic absorption spectroscopy.
j) Determined by mercury intrusion, to 4136 bar using a Micromeritics Autopore 9210, using a 130° contact angle and 0.473 N/m surface tension of mercury. Numbers listed are percent pore volume.

## TABLE IV

### Catalyst Properties

| | EXAMPLE 2 | EXAMPLE 3 | EXAMPLE 4 | COMPARATIVE EXPERIMENT F |
|---|---|---|---|---|
| Ageing pH[a] | 10.0 | 10.0 | 10.0 | |
| Density g/ml[b] | 0.66 | 0.84 | 0.79 | 0.77 |
| Reslurry pH[c] | 6.0 | 6.5 | 10.0 | |
| $N_2$ Surface Area $m^2/g$[d] | 418 | 404 | 374 | 190 |
| $N_2$ Pore Volume ml/g[e] | 0.61 | 0.38 | 0.40 | |
| Flat Plate Crush Strength N.[f] | 85 | 80 | 58 | 71 |
| %wt. Nickel[g] | 3.0 | 2.9 | 2.6 | 2.4 |
| %wt. Molybdenum[h] | 12.0 | 12.1 | 7.9 | 9.8 |
| %wt. Phosphorus[i] | 3.7 | 2.0 | 3.3 | 2.0 |

a) - i) see explanation after Table II

EP 0 266 010 B1

65  60  55  50  45  40  35  30  25  20  15  10  5

## TABLE V

### Catalyst Pore Size Distributions

| Hg Pore[j) Size Dist | EXAMPLE 2 | EXPERIMENT 3 | EXPERIMENT 4 | COMPARATIVE EXPERIMENT F |
|---|---|---|---|---|
| < 5 nm | 70.3 | 84.9 | 86.5 | 2.9 |
| 5 - 7 nm | 16.7 | 3.5 | 3.9 | 14.9 |
| 7 - 10 nm | 3.9 | 2.8 | 2.6 | 40.1 |
| 10 - 15 nm | 3.2 | 2.7 | 2.7 | 35.9 |
| 15 - 35 nm | 3.5 | 2.8 | 3.1 | 4.1 |
| > 35 nm | 2.4 | 3.3 | 1.2 | 2.0 |

j) see explanation after Table II

## TABLE VI

### Specific Catalyst Performance

| | CCHGO VOLUMETRIC | | |
|---|---|---|---|
| | H | N | S |
| Example 2 | 1.05 | 1.29 | 1.15 |
| Example 3 | 1.09 | 1.23 | 1.16 |
| Example 4 | 0.95 | 1.11 | 0.87 |
| Comparative Experiment F | 1.00 | 1.00 | 1.00 |

H = hydrogenation

N = denitrogenation

S = desulphurization

### Claims

1. A process for preparing highly active hydrotreating catalysts having surface areas above 300 m²/g and at least 80% of the pore diameters less than 7 nm, which process comprises:
    (a) precipitating an aqueous solution of one or more aluminium salt(s) in the presence of a phosphorus-containing compound by adjusting the pH of said solution to a range between 5.5 and 10.0 at a temperature in the range between 20 °C and 90 °C, thereby forming a precipitate,
    (b) ageing the precipitate at a temperature ranging from 20 °C to 90 °C for at least 15 minutes at a pH ranging from 8.0 to 12.0,
    (c) washing the precipitate,
    (d) mixing the precipitate with dry, water-soluble salts of a heavy metal selected from the group consisting of molybdenum, tungsten and mixtures thereof and either of cobalt at a pH in the range between 4.0 and 10.0 or of nickel and a phosphorus-containing compound in an amount of from 0.2to 1.5 moles of phosphorus per mole of heavy metal at a pH in the range between 4.0 and 8.0 at a temperature in the range between 25 °C and 100 °C to yield a final catalyst having from 1 % to 5 % of cobalt or nickel and from 8 % to 32 % heavy metal,
    (e) extruding the product of step (d), and
    (f) drying and calcining the product of step (e) at a temperature ranging from 300°C to 900°C.

2. A process according to claim 1, wherein step (a) comprises titrating an aqueous solution of an acid aluminium salt and an aqueous solution of a basic aluminium compound in the presence of a phosphorus-containing compound at a pH in the range between 5.5 and 10.0 and a temperature in the range between 20 °C and 90 °C, thereby forming a precipitate.

3. A process according to claim 1, wherein step (a) comprises titrating an aqueous solution of a basic aluminium compound at a pH in the range between 5.5 and 10.0 and a temperature in the range between 20 °C and 90 °C, thereby forming a precipitate.

4. A process according to claim 1, wherein step (a) comprises titrating an aqueous solution of an acid aluminium salt with an aqueous solution of a basic aluminium compound and sodium phosphate at pH in the range between 5.5 and 10.0 and a temperature in the range between 20 °C and 90 °C, thereby forming a precipitate.

5. A process according to claim 1, wherein step (d) comprises mixing a dry, water-soluble salt of a heavy metal selected from the group consisting of molybdenum, tungsten and mixtures thereof, and a mixture of a dry, water-soluble nickel salt and a phosphorus-containing compound in an amount of from 0.2 to 1.5 moles of phosphorus per mole of heavy metal with the precipitate at pH in the range between 4.0 and 0.8 or a mixture of a dry, water-soluble cobalt salt and a phosphorus-containing compound with the precipitate at a pH in the range between 4.0 and 10.0, at a temperature in the range between 25 °C and 100 °C to yield a final catalyst having from 1 %w to 5 %w of cobalt or nickel and from 8 %w to 32 %w of heavy metal.

6. A process according to claim 1, wherein step (a) comprises titrating an aqueous solution of an acid aluminium salt and an aqueous solution of a basic aluminium compound in the presence of a phosphorus-containing compound at a pH in the range between 5.5 and 10.0 and a temperature in the range between 20 °C and 90 °C, thereby forming a precipitate, and step (d) comprises mixing a dry, water-soluble salt of a heavy metal selected from the group consisting of molybdenum, tungsten and mixtures thereof, and a mixture of a dry, water-soluble nickel salt and a phosphorus-containing compound in an amount of from 0.2 to 1.5 moles of phosphorus per mole of heavy metal with the precipitate at a pH in the range between 4.0 and 8.0 or a mixture of a dry, water-soluble cobalt salt and a phosphorus-containing compound with the precipitate at a pH in the range between 4.0 and 10.0, at a temperature in the range between 25 °C and 100 °C to yield a final catalyst having from 1 %w to 5 %w of cobalt or nickel and from 8 %w to 32 %w heavy metal.

7. A process according to claim 1, wherein step (a) comprises titrating an aqueous solution of acid aluminium salt and phosphoric acid with an aqueous solution of a basic aluminium compound at a pH in the range between 5.5 and 10.0 and a temperature in the range between 20 °C and 90 °C, thereby forming a precipitate, and step (d) comprises mixing a dry, water-soluble metal salt of a heavy metal selected from the group consisting of molybdenum, tungsten and mixtures thereof, and a mixture of a dry, water-soluble nickel salt and a phosphorus-containing compound in an amount of from 0.2 to 1.5 moles of heavy metal with the precipitate at a pH in the range between 4.0 and 8.0 or a mixture of a dry, water-soluble cobalt salt and a phosphorus-containing compound with the precipitate at a pH in the range between 4.0 and 10.0, at a temperature in the range between 25 °C and 100 °C to yield a final catalyst having from 1 %w to 5 %w of cobalt or nickel and from 8 %w to 32 %w heavy metal.

8. A process according to claim 1, wherein step (a) comprises titrating an aqueous solution of an acid aluminium salt with an aqueous solution of a basic aluminium compound and sodium phosphate at a pH in the range between 5.5 and 10.0 and a temperature in the range between 20 °C and 90 °C, thereby forming a precipitate, and step (d) comprises mixing a dry, water-soluble metal salt of a heavy metal selected from the group consisting of molybdenum, tungsten and mixtures thereof, and a mixture of a dry, water-soluble nickel salt and a phosphorus-containing compound in an amount of from 0.2 to 1.5 moles of phosphorus per mole of heavy metal with the precipitate at a pH in the range between 4.0 and 8.0 or a mixture of a dry, water-soluble cobalt salt and a phosphorus-containing compound with the precipitate at a pH in the range between 4.0 and 10.0 at a temperature in the range between 25 °C and 100 °C to yield a final catalyst having from 1 %w to 5 %w of cobalt or nickel and from 8 %w to 32 %w heavy metal.

9. A process according to claim 2, wherein step (a) comprises titrating an aqueous solution of an acid aluminium salt selected from the group consisting of aluminium sulphate, aluminium nitrate and aluminium chloride, and an aqueous solution of a basic aluminium compound selected from the group consisting of sodium aluminate and potassium aluminate, in the presence of a phosphorus-containing compound at a pH in the range between 5.5 and 8.0 and a temperature in the range between 20 °C and 90 °C, thereby forming a precipitate, and step (d) comprises mixing the precipitate with dry, water-soluble nickel salts and molybdate or dimolybdate salts, and phosphoric acid in an amount of from 0.2 to 1.5 moles of phosphorus per mole of molybdenum or with dry, water-soluble cobalt salts and molybdate or dimolybdate salts and optionally phosphoric acid in an amount of from 0.2 to 1.5 moles of phosphorus per moles of molybdenum at a pH in the range between 4.0 and 6.0, and a temperature in the range between 25 °C and 100 °C to yield a final catalyst having from 2.5 %w to 4 %w of cobalt or nickel and from 10 %w to 14 %w molybdenum.

10. A process according to claim 1, wherein step (a) comprises precipitating an aqueous solution of an acid aluminium salt selected from the group consisting of aluminium sulphate, aluminium nitrate and aluminium chloride, and an aqueous solution of a base in the presence of a phosphorus-containing compound at a pH in the range between 5.5 and 8.0 and a temperature in the range between 20 °C and 90 °C, and step (d) comprises mixing the precipitate with dry, water-soluble nickel salts and molybdate or dimolybdate salts, and phosphoric acid in an amount of from 0.2 to 1.5 moles of phosphorus per mole of molybdenum or with dry, water-soluble cobalt salts and molybdate or dimolybdate salts and optionally phosphoric acid in an amount of from 0.2 to 1.5 moles of phosphorus per mole of molybdenum at pH in the range between 4.0 and 6.0 and a temperature in the range between 25 °C and 100 °C to yield a final catalyst having from 2.5 %w to 4 %w of cobalt or nickel and from 10 %w to 14 %w molybdenum.

11. A process according to claim 1, wherein step (a) comprises precipitating an aqueous solution of an acid with an aqueous solution of a basic compound selected from the group consisting of sodium aluminate and potassium aluminate, in the presence of a phosphorus-containing compound at a pH in the range between 5.5 and 8.0 and a temperature in the range between 20 °C and 90 °C, and wherein step (d) comprises mixing the precipitate with dry, water-soluble nickel salts and molybdate or dimolybdate salts, and phosphoric acid in an amount of from 0.2 to 1.5 moles of phosphorus per mole of molybdenum or with dry, water-soluble cobalt salts and molybdate or dimolybdate salts and optionally phosphoric acid in an amount of from 0.2 to 1.5 moles of phosphorus per mole of molybdenum at a pH in the range between 4.0 and 6.0, and a temperature in the range between 25 °C and 100 °C to yield a final catalyst having from 2.5 %w to 4 %w of cobalt or nickel and from 10 %w to 14 %w molybdenum.

12. A process according to one or more of claims 1 - 8 wherein process step (a) is carried out at a pH in the range between 5.5 and 8.0.

13. A process according to one or more of claims 1 - 12 wherein step (a) is carried out at a temperature between 50 °C and 85 °C.

14. A process according to one or more of claims 1 -12 wherein the amount of phosphorus-containing compound in step a) is from 0.06 to 0.30 moles of phosphorus per mole of aluminium.

15. A process according to one or more of claims 1 - 14 wherein the step (b) is carried out at a pH in the range between 9.0 and 11.0.

16. A catalyst which comprises a catalytically effective amount of cobalt or nickel and a catalytically effective amount of a heavy metal selected from the group consisting of molybdenum, tungsten or mixtures thereof, on an alumina support, said catalyst having a surface area greater than 300 m2/g and at least about 80 % of its pore volume in pores having diameters less than 7 nm, wherein said catalyst has been prepared by the process according to one or more of claims 1 - 15.

17. A process for hydrotreating hydrocarbon-containing feeds wherein a catalyst is used which has been prepared by a process according to one or more of claims 1 - 15.

## Patentansprüche

1. Ein Verfahren zur Herstellung von hochaktiven, für die Hydrobehandlung geeigneten Katalysatoren mit Oberflächenausdehnungen von mehr als 300 m2/g und Porendurchmessern, die zu mindestens 80% kleiner sind als 7 nm, welches Verfahren die Schritte umfaßt:

(a) Ausfällen einer wäßrigen Lösung eines oder mehrerer Aluminiumsalze(s) in Gegenwart einer phosphorhaltigen Verbindung durch Einstellen des pH-Wertes der genannten Lösung auf einen Bereich zwischen 5,5 und 10,0 bei einer Temperatur im Bereich zwischen 20°C und 90°C, unter Bildung eines Niederschlags,

(b) Altern des Niederschlags bei einer Temperatur im Bereich von 20°C bis 90°C über einen Zeitraum von mindestens 15 Minuten bei einem pH-Wert im Bereich von 8,0 bis 12,0,

(c) Waschen des Niederschlags,

(d) Mischen des Niederschlags mit trockenen, wasserlöslichen Salzen eines Schwermetalls, ausgewählt aus der Gruppe bestehend aus Molybdän, Wolfram und Mischungen davon, und entweder Kobalt bei einem pH-Wert von 4,0 bis 10,0 oder Nickel und einer phosphorhaltigen Verbindung in einer Menge von 0,2 bis 1,5 Mol Phosphor pro Mol Schwermetall bei einem pH-Wert im Bereich zwischen 4,0 und 8,0 bei einer Temperatur im Bereich zwischen 25°C und 100°C, so daß ein Endkatalysator mit 1 bis 5% Kobalt oder Nickel und zwischen 8 und 32% Schwermetall erhalten wird,

(e) Extrudieren des in Stufe (d) erhaltenen Produkts, und

(f) Trocknen und Calzinieren des Produktes von Stufe (e) bei einer Temperatur im Bereich von 300°C bis 900°C.

2. Ein Verfahren nach Anspruch 1, in welchem die Stufe (a) das Titrieren einer wäßrigen Lösung eines sauren Aluminiumsalzes und einer wäßrigen Lösung einer basischen Aluminiumverbindung in Gegenwart einer phosphorhaltigen Verbindung bei einem pH-Wert im Bereich zwischen 5,5 und 10,0 und einer Temperatur im Bereich zwischen 20°C und 90°C, unter Bildung eines Niederschlags, umfaßt.

3. Ein Verfahren nach Anspruch 1, in welchem die Stufe (a) das Titrieren einer wäßrigen Lösung einer basischen Aluminiumverbindung bei einem pH-Wert im Bereich zwischen 5,5 und 10,0 und einer Temperatur im Bereich zwischen 20°C und 90°C, unter Bildung eines Niederschlags, umfaßt.

4. Ein Verfahren nach Anspruch 1, in welchem die Stufe (a) das Titrieren einer wäßrigen Lösung eines sauren Aluminiumsalzes mit einer wäßrigen Lösung einer basischen Aluminiumverbindung und Natriumphosphat bei einem pH-Wert im Bereich zwischen 5,5 und 10,0 und einer Temperatur im Bereich zwischen 20°C und 90°C, unter Bildung eines Niederschlags, umfaßt.

5. Ein Verfahren nach Anspruch 1, in welchem die Stufe (d) das Mischen eines trockenen, wasserlöslichen Salzes eines Schwermetalls, ausgewählt aus der Gruppe bestehend aus Molybdän, Wolfram und Mischungen davon, und einer Mischung eines trockenen wasserlöslichen Nickelsalzes und einer phosphorhaltigen Verbindung in einer Menge von 0,2 bis 1,5 Mol Phosphor pro Mol Schwermetall mit dem Niederschlag bei einem pH-Wert im Bereich von 4,0 und 8,0 oder einer Mischung eines trockenen, wasserlöslichen Kobaltsalzes und einer phosphorhaltigen Verbindung mit dem Niederschlag bei einem pH-Wert im Bereich zwischen 4,0 und 10,0 und einer Temperatur im Bereich zwischen 25°C und 100°C, zwecks Erhalt eines Endkatalysators mit 1 bis 5 Gewichtsprozent Kobalt oder Nickel und zwischen 8 und 32 Gewichtsprozent eines Schwermetalls, umfaßt.

6. Ein Verfahren nach Anspruch 1, in welchem die Stufe (a) das Titrieren einer wäßrigen Lösung eines sauren Aluminiumsalzes und einer wäßrigen Lösung einer basischen Aluminiumverbindung in Gegenwart einer phosphorhaltigen Verbindung bei einem pH-Wert im Bereich zwischen 5,5 und 10,0 und einer Temperatur im Bereich von 20°C bis 90°C, unter Bildung eines Niederschlags, und die Stufe (d) das Mischen eines trockenen, wasserlöslichen Salzes eines Schwermetalls, ausgewählt aus der Gruppe bestehend aus Molybdän, Wolfram und Mischungen davon, und einer Mischung eines trockenen, wasserlöslichen Nickelsalzes und einer phosphorhaltigen Verbindung in einer Menge von 0,2 bis 1,5 Mol Phosphor pro Mol Schwermetall mit dem Niederschlag bei einem pH-Wert im Bereich zwischen 4,0 und 8,0 oder einer Mischung eines trockenen, wasserlöslichen Kobaltsalzes und einer phosphorhaltigen Verbindung mit dem Niederschlag bei einem pH-Wert im Bereich zwischen 4,0 und 10,0, bei einer Temperatur im Bereich zwischen 25°C und 100°C, zwecks Erhalt eines Endkatalysators mit 1 bis 5 Gewichtsprozent Kobalt oder Nickel und 8 bis 32 Gewichtsprozent eines Schwermetalls, umfaßt.

7. Ein Verfahren nach Anspruch 1, in welchem die Stufe (a) das Titrieren einer wäßrigen Lösung eines sauren Aluminiumsalzes und Phosphorsäure mit einer wäßrigen Lösung einer basischen Aluminiumverbindung bei einem pH-Wert im Bereich zwischen 5,5 und 10,0 und einer Temperatur im Bereich zwischen 20°C und 90°C, unter Bildung eines Niederschlags, und die Stufe (d) das Mischen eines trockenen wasserlöslichen Metallsalzes eines Schwermetalls, ausgewählt aus der Gruppe bestehend aus Molybdän, Wolfram und Mischungen davon, und einer Mischung eines trockenen, wasserlöslichen Nickelsalzes und einer phosphorhaltigen Verbindung in einer Menge von 0,2 bis 1,5 Mol Phosphor pro Mol Schwermetall mit dem Niederschlag bei einem pH-Wert im Bereich zwischen 4,0 und 8,0 oder einer Mischung eines trockenen, wasserlöslichen Kobaltsalzes und einer phosphorhaltigen Verbindung mit dem Niederschlag bei einem pH-Wert im Bereich zwischen 4,0 und 10,0 und einer Temperatur im Bereich zwischen 25°C und 100°C, zwecks Erhalt eines Endkatalysators mit 1 bis 5 Gewichtsprozent Kobalt oder Nickel und 8 bis 32 Gewichtsprozent Schwermetall, umfassen.

8. Ein Verfahren nach Anspruch 1, in welchem die Stufe (a) das Titrieren einer wäßrigen Lösung eines sauren Aluminiumsalzes mit einer wäßrigen Lösung einer basischen Aluminiumverbindung und Natriumphosphat bei einem pH-Wert im Bereich zwischen 5,5 und 10,0 und einer Temperatur im Bereich zwischen 20°C und 90°C, unter Bildung eines Niederschlags, und die Stufe (d) das Mischen eines trockenen, wasserlöslichen Metallsalzes eines Schwermetalls, ausgewählt aus der Gruppe bestehend aus Molybdän, Wolfram und Mischungen davon, und einer Mischung eines trockenen, wasserlöslichen Nickelsalzes und einer phosphorhaltigen Verbindung in einer Menge von 0,2 bis 1,5 Mol Phosphor pro Mol Schwermetall mit dem Niederschlag bei einem pH-Wert im Bereich zwischen 4,0 und 8,0 oder einer Mischung eines trockenen, wasserlöslichen Kobaltsalzes und einer phosphorhaltigen Verbindung mit dem Niederschlag bei einem pH-Wert im Bereich zwischen 4,0 und 10,0 bei einer Temperatur im Bereich zwischen 25°C und 100°C, zwecks Erhalt eines Endkatalysators mit 1 bis 5 Gewichtsprozent Kobalt oder Nickel und 8 bis 32 Gewichtsprozent Schwermetall, umfassen.

9. Ein Verfahren nach Anspruch 2, in welchem die Stufe (a) das Titrieren einer wäßrigen Lösung eines sauren Aluminiumsalzes, ausgewählt aus der Gruppe bestehend aus Aluminiumsulfat, Aluminiumnitrat und Aluminiumchlorid, und einer wäßrigen Lösung einer basischen Aluminiumverbindung, ausgewählt aus der Gruppe bestehend aus Natriumaluminat und Kaliumaluminat, in Gegenwart einer phosphorhaltigen Verbindung bei einem pH-Wert im Bereich zwischen 5,5 und 8,0 und einer Temperatur im Bereich zwischen 20°C und 90°C, unter Bildung eines Niederschlags, und die Stufe (d) das Mischen des Niederschlags mit trockenen, wasserlöslichen Nickelsalzen und Molybdat- oder Dimolybdatsalzen, und Phosphorsäure in einer Menge von 0,2 bis 1,5 Mol Phosphor pro Mol Molybdän oder mit trockenen, wasserlöslichen Kobaltsalzen und Molybdat- oder Dimolybdatsalzen und gegebenenfalls Phosphorsäure in einer Menge von 0,2 bis 1,5 Mol Phosphor pro Mol Molybdän bei einem pH-Wert im Bereich zwischen 4,0 und 6,0, und einer Temperatur im Bereich zwischen 25°C und 100°C, zwecks Erhalt eines Endkatalysators mit 2,5 bis 4 Gewichtsprozent Kobalt oder Nickel und mit 10 bis 14 Gewichtsprozent Molybdän, umfassen.

10. Ein Verfahren nach Anspruch 1, in welchem die Stufe (a) das Ausfällen einer wäßrigen Lösung eines sauren Aluminiumsalzes, ausgewählt aus der Gruppe bestehend aus Aluminiumsulfat, Aluminiumnitrat und Aluminiumchlorid, und einer wäßrigen Lösung einer Base in Gegenwart einer phosphorhaltigen Verbindung bei einem pH-Wert im Bereich von 5,5 bis 8,0 und einer Temperatur im Bereich von 20°C bis 90°C, und die Stufe (d) das Mischen des Niederschlags mit trockenen, wasserlöslichen Nickelsalzen und Molybdat- oder Dimolybdatsalzen, und Phosphorsäure in einer Menge von 0,2 bis 1,5 Mol Phosphor pro Mol Molybdän oder mit trockenen, wasserlöslichen Kobaltsalzen und Molybdat- oder Dimolybdatsalzen und gegebenenfalls Phosphorsäure in einer Menge von 0,2 bis 1,5 Mol Phosphor pro Mol Molybdän bei einem pH-Wert im Bereich von 4,0 bis 6,0 und einer Temperatur im Bereich zwischen 25°C und 100°C, zwecks Erhalt eines Endkatalysators mit 2,5 bis 4 Gewichtsprozent Kobalt oder Nickel und 10 bis 14 Gewichtsprozent Molybdän, umfassen.

11. Ein Verfahren nach Anspruch 1, in welchem die Stufe (a) das Ausfällen einer wäßrigen Lösung einer Säure mit einer wäßrigen Lösung einer basischen Verbindung, ausgewählt aus der Gruppe bestehend aus Natriumaluminat und Kaliumaluminat, in Gegenwart einer phosphorhaltigen Verbindung bei einem pH-Wert im Bereich zwischen 5,5 und 8,0 und einer Temperatur im Bereich zwischen 20°C und 90°C, und in welchem die Stufe (d) das Mischen des Niederschlags mit trockenen, wasserlöslichen Nickelsalzen und Molybdat- oder Dimolybdatsalzen, und Phosphorsäure in einer Menge von 0,2 bis 1,5 Mol Phosphor pro Mol Molybdän bei einem pH-Wert im Bereich zwischen 4,0 und 6,0 und einer Temperatur im Bereich zwischen 25°C und 100°C, zwecks Erhalt eines Endkatalysators mit 2,5 bis 4 Gewichtsprozent Kobalt oder Nickel und 10 bis 14 Gewichtsprozent Molybdän, umfassen.

12. Ein Verfahren nach einem oder mehreren der Ansprüche 1 bis 8, in welchem die Verfahrensstufe (a) bei einem pH-Wert im Bereich zwischen 5,5 und 8,0 durchgeführt wird.

13. Ein Verfahren nach einem oder mehreren der Ansprüche 1 bis 12, in welchem die Stufe (a) bei einer Temperatur zwischen 50°C und 85°C durchgeführt wird.

14. Ein Verfahren nach einem oder mehreren der Ansprüche 1 bis 12, in welchem die Menge der phosphorhaltigen Verbindung in Stufe (a) zwischen 0,06 und 0,30 Mol Phosphor pro Mol Aluminium beträgt.

15. Ein Verfahren nach einem oder mehreren der Ansprüche 1 bis 14, in welchem die Stufe (b) bei einem pH-Wert im Bereich zwischen 9,0 und 11,0 durchgeführt wird.

16. Ein Katalysator, der eine katalytisch wirksame Menge an Kobalt oder Nickel und eine katalytisch wirksame Menge eines Schwermetalls, ausgewählt aus der Gruppe bestehend aus Molybdän, Wolfram oder Mischungen davon, auf einem Aluminiumträger umfaßt, wobei dieser Katalysator eine Oberflächenausdehnung von größer als 300m²/g hat und sein Porenvolumen zu mindestens 80% aus Poren mit einem Durchmesser von weniger als 7 nm besteht, wobei dieser Katalysator durch das Verfahren nach einem oder mehreren der Ansprüche 1 bis 15 hergestellt wurde.

17. Ein Verfahren zur Hydrobehandlung von kohlenwasserstoffhaltigem Einsatzmaterial, in welchem ein Katalysator verwendet wird, der durch ein Verfahren nach einem oder mehreren der Ansprüche 1 bis 15 hergestellt wurde.

**Revendications**

1. Un procédé de préparation de catalyseurs d'hydrotraitement très actifs ayant des surfaces spécifiques de plus de 300 m²/g et au moins 80% des diamètres de pores inférieurs à 5 nm, procédé qui comprend:

(a) la précipitation à partir d'une solution aqueuse d'un ou plusieurs sels d'aluminium en présence d'un composé contenant du phosphore, par ajustement du pH de cette solution à un intervalle compris entre 5,5 et 10,0 à une température comprise entre 20°C et 90°C, de manière à former un précipité,

(b) le vieillissement du précipité à une température comprise entre 20°C et 90°C pendant au moins 15 minutes à un pH compris entre 8,0 et 12,0,

(c) le lavage du précipité,

(d) le mélange du précipité avec des sels secs, solubles dans l'eau, d'un métal lourd choisi dans le groupe constitué par le molybdène, le tungstène et leurs mélanges, et soit de cobalt à un pH compris entre 4,0 et 10,0, soit de nickel et d'un composé contenant du phosphore à raison de 0,2 à 1,5 mole de phosphore par mole de métal lourd, à un pH compris entre 4,0 et 8,0 à une température comprise entre 25°C et 100°C, de manière à donner un catalyseur final ayant de 1 % en poids à 5 % en poids de cobalt et de nickel et de 8 % en poids à 32 % en poids de métal lourd,

(e) l'extrusion du produit de l'étape (d) et

(f) le séchage et la calcination du produit de l'étape (e) à une température comprise entre 300°C et 900°C.

2. Un procédé selon la revendication 1, dans lequel l'étape (a) comprend le titrage d'une solution aqueuse d'un sel acide d'aluminium et d'une solution aqueuse d'un composé basique d'aluminium en présence d'un composé contenant du phosphore à un pH compris entre 5,5 et 10,0 et à une température comprise entre 20°C et 90°C, de manière à former un précipité.

3. Un procédé selon la revendication 1, dans lequel l'étape (a) comprend le titrage d'une solution aqueuse d'un composé basique d'aluminium à un pH compris entre 5,5 et 10,0 et à une température comprise entre 20°C et 90°C, de manière à former un précipité.

4. Un procédé selon la revendication 1, dans lequel l'étape (a) comprend le titrage d'une solution aqueuse d'un sel acide d'aluminium avec une solution aqueuse d'un composé basique d'aluminium et de phosphate de sodium à un pH compris entre 5,5 et 10,0 et à une température comprise entre 20°C et 90°C, de manière à former un précipité.

5. Un procédé selon la revendication 1, dans lequel l'étape (d) comprend le mélange d'un sel sec, soluble dans l'eau, d'un métal lourd choisi dans le groupe constitué par le molybdène, le tungstène et leurs mélanges et d'un mélange d'un sel de nickel sec, soluble dans l'eau et d'un composé contenant du phosphore à raison de 0,2 à 1,5 mole de phosphore par mole de métal lourd avec le précipité à un pH compris entre 4,0 et 8,0 ou d'un mélange d'un sel de cobalt sec, soluble dans l'eau et d'un composé contenant du phosphore avec le précipité à un pH compris entre 4,0 et 10,0, à une température comprise entre 25°C et 100°C, de manière à donner un catalyseur final ayant de 1 % en poids à 5 % en poids de cobalt ou de nickel et de 8 % en poids à 32 % en poids de métal lourd.

6. Un procédé selon la revendication 1, dans lequel l'étape (a) comprend le titrage d'une solution aqueuse d'un sel acide d'aluminium et d'une solution aqueuse d'un sel basique d'aluminium en présence d'un composé contenant du phosphore à un pH compris entre 5,5 et 10,0 et à une température comprise entre 20°C et 90°C, de manière à former un précipité, et l'étape (d) comprend le mélange d'un sel sec, soluble dans l'eau, d'un métal lourd choisi dans le groupe constitué par le molybdène, le tungstène et leurs mélanges, et d'un mélange d'un sel de nickel sec, soluble dans l'eau, et d'un composé contenant du phosphore à raison de 0,2 à 1,5 mole de phosphore par mole de métal lourd avec le précipité à un pH compris entre 4,0 et 8,0, ou d'un mélange d'un sel sec de cobalt sec, soluble dans l'eau, et d'un composé contenant du phosphore avec le précipité à un pH compris entre 4,0 et 10,0, à une température comprise entre

16

25°C et 100°C, de manière à donner un catalysateur final ayant de 1 % en poids à 5 % en poids de cobalt ou de nickel et de 8 % en poids à 32 % en poids de métal lourd.

7. Un procédé selon la revendication 1, dans lequel l'étape (a) comprend le titrage d'une solution aqueuse d'un sel acide d'aluminium et d'acide phosphorique avec une solution aqueuse d'un composé basique d'aluminium à un pH compris entre 5,5 et 10,0 et à une température comprise entre 20°C et 90°C, de manière à former un précipité, et l'étape (d) comprend le mélange d'un sel sec, soluble dans l'eau, d'un métal lourd choisi dans le groupe constitué par le molybdène, le tungstène et leurs mélanges et d'un mélange d'un sel de nickel sec, soluble dans l'eau, et d'un composé contenant du phosphore à raison de 0,2 à 1,5 mole de phosphore par mole de métal lourd avec le précipité à un pH compris entre 4,0 et 8,0 ou d'un mélange d'un sel de cobalt sec, soluble dans l'eau, et d'un composé contenant du phosphore avec le précipité à un pH compris entre 4,0 et 10,0, à une température comprise entre 25°C et 100°C, de manière à donner un catalyseur final ayant de 1 % en poids à 5 % en poids de cobalt ou de nickel et de 8 % en poids à 32 % en poids de métal lourd.

8. Un procédé selon la revendication 1, dans lequel l'étape (a) comprend le titrage d'une solution aqueuse d'un sel acide d'aluminium avec une solution aqueuse d'un composé basique d'aluminium et de phosphate de sodium à un pH compris entre 5,5 et 10,0 et à une température comprise entre 20°C et 90°C, de manière à former un précipité, et l'étape (d) comprend le mélange d'un sel sec, soluble dans l'eau, d'un métal lourd choisi dans le groupe constitué par le molybdène, le tungstène et leurs mélanges et d'un mélange d'un sel de nickel sec, soluble dans l'eau, et d'un composé contenant du phosphore à raison de 0,2 à 1,5 mole de phosphore par mole de métal lourd avec le précipité à un pH compris entre 4,0 et 8,0, ou d'un mélange d'un sel de cobalt sec, soluble dans l'eau et d'un composé contenant du phosphore avec le précipité à un pH compris entre 4,0 et 10,0 et à une température comprise entre 25°C et 100°C de manière à donner un catalyseur final ayant de 1 % en poids à 5 % en poids de cobalt ou de nickel et de 8 % en poids à 32 % en poids de métal lourd.

9. Un procédé selon la revendication 2, dans lequel l'étape (a) comprend le titrage d'une solution aqueuse d'un sel acide d'aluminium choisi dans le groupe constitué par le sulfate d'aluminium, le nitrate d'aluminium et le chlorure d'aluminium, et d'une solution aqueuse d'un composé basique d'aluminium choisi dans le groupe constitué par l'aluminate de sodium et l'aluminate de potassium, en présence d'un composé contenant du phosphore à un pH compris entre 5,5 et 6,0 et à une température comprise entre 20°C et 90°C, de manière à former un précipité, et l'étape (d) comprend le mélange du précipité avec des sels de nickel secs, solubles dans l'eau et des sels molybdates ou dimolybdates, de l'acide phosphorique à raison de 0,2 à 1,5 mole de phosphore par mole de molybdène, ou avec des sels de cobalt secs, solubles dans l'eau et des sels molybdates ou dimolybdates et éventuellement de l'acide phosphorique à raison de 0,2 à 1,5 mole de phosphore par mole de molybdène à un pH compris entre 4,0 et 6,0 et à une température comprise entre 25°C et 100°C de manière à donner un catalyseur final ayant de 2,5 % en poids à 4 % en poids de cobalt ou de nickel et de 10 % en poids à 14 % en poids de molybdène.

10. Un procédé selon la revendication 1, dans lequel l'étape (a) comprend la précipitation d'une solution aqueuse d'un sel acide d'aluminium choisi dans le groupe constitué par le sulfate d'aluminium, le nitrate d'aluminium et le chlorure d'aluminium et d'une solution aqueuse d'une base en présence d'un composé contenant du phosphore à un pH compris entre 5,5 et 8,0 et à une température comprise entre 20°C et 90°C, et l'étape (d) comprend le mélange du précipité avec des sels de nickel secs, solubles dans l'eau, et des sels molybdates ou dimolybdates, et de l'acide phosphorique à raison de 0,2 à 1,5 mole de phosphore par mole de molybdène, ou avec des sels de cobalt secs, solubles dans l'eau, et des sels molybdates ou dimolybdates et éventuellement de l'acide phosphorique à raison de 0,2 à 1,5 mole de phosphore par mole de molybdène à un pH compris entre 4,0 et 6,0 et à une température comprise entre 25°C et 100°C de manière à donner un catalyseur final ayant de 2,5 % en poids à 4 % en poids de cobalt ou de nickel et de 10 % en poids à 14 % en poids de molybdène.

11. Un procédé selon la revendication 1, dans lequel l'étape (a) comprend la précipitation d'une solution aqueuse d'un acide avec une solution aqueuse d'un composé basique choisi dans le groupe constitué par l'aluminate de sodium et l'aluminate de potassium, en présence d'un composé contenant du phosphore, à un pH compris entre 5,5 et 8,0 et à une température comprise entre 20°C et 90°C, et l'étape (d) comprend le mélange du précipité avec des sels de nickel secs, solubles dans l'eau, et des sels molybdates ou dimolybdates, et de l'acide phosphorique à raison de 0,2 à 1,5 mole de phosphore par mole de molybdène ou avec des sels de cobalt secs, solubles dans l'eau et des sels molybdates ou dimolybdates et éventuellement de l'acide phosphorique à raison de 0,2 à 1,5 mole de phosphore par mole de molybdène à un pH compris entre 4,0 et 6,0 et à une température comprise entre 25°C et 100°C de manière à donner un catalyseur final ayant de 2,5 % en poids à 4 % en poids de cobalt ou de nickel et de 10 % en poids à 14 % en poids de molybdène.

12. Un procédé selon une ou plusieurs des revendications 1–8, dans lequel l'étape (a) est conduite à un pH compris entre 5,5 et 8,0.

13. Un procédé selon une ou plusieurs des revendications 1–12, dans lequel l'étape (a) est conduite à une température comprise entre 50°C et 85°C.

14. Un procédé selon une ou plusieurs des revendications 1–12, dans lequel la quantité de composé contenant du phosphore dans l'étape a) est comprise entre 0,06 et 0,30 mole de phosphore par mole d'aluminium.

17

15. Un procédé selon une ou plusieurs des revendications 1–14, dans lequel l'étape (b) est conduite à un pH compris entre 9,0 et 11,0.

16. Un catalyseur qui comprend une quantité catalytiquement efficace de cobalt ou de nickel et une quantité catalytiquement efficace d'un métal lourd choisi dans le groupe constitué par le molybdène, le tungstène et leurs mélanges, sur un support d'alumine, ce catalyseur ayant une surface spécifique supérieure à 300 m²/g et au moins environ 80 % de son volume de pores dans des pores ayant des diamètres de moins de 7 nm, ce catalyseur ayant été préparé par un procédé selon une ou plusieurs des revendications 1–15.

17. Un procédé d'hydrotraitement de charges contenant des hydrocarbures, dans lequel on utilise un catalyseur qui a été préparé par un procédé selon une ou plusieurs des revendications 1–15.